# EUROPÄISCHE PATENTSCHRIFT

(11) **EP 3 158 603 B1**
(45) Veröffentlichungstag und Bekanntmachung des Hinweises auf die Patenterteilung: **16.01.2019**
(21) Anmeldenummer: 15730174.8
(22) Anmeldetag: 22.06.2015
(51) Int. Cl.: H01M 8/0247, H01M 8/0273, H01M 8/1018

(54) **BRENNSTOFFZELLE UND BRENNSTOFFZELLENANORDNUNG**
FUEL CELL AND FUEL CELL ARRANGEMENT
PILE À COMBUSTIBLE ET SYSTÈME DE PILE À COMBUSTIBLE

(30) Priorität: 23.06.2014 DE 102014108746
(43) Veröffentlichungstag der Anmeldung: 26.04.2017
(73) Patentinhaber: ThyssenKrupp Marine Systems GmbH, 24143 Kiel (DE); thyssenkrupp AG, 45143 Essen (DE)
(72) Erfinder: NEHTER, Pedro, 24226 Heikendorf (DE)
(74) Vertreter: thyssenkrupp Intellectual Property GmbH
(86) Internationale Anmeldenummer: PCT/EP2015/063902
(87) Internationale Veröffentlichungsnummer: WO 2015/197508

(56) Entgegenhaltungen:
- JP-A- H0 689 726
- JP-A- H10 247 504
- US-A1- 2010 221 633

## Beschreibung

### Stand der Technik

Es ist bekannt, Brennstoffzellen in Fahrzeugen und mobilen Geräten zur Wandlung von chemischer Reaktionsenergie in elektrische Energie zu verwenden. Eine solche Brennstoffzelle ist die PEM-Brennstoffzelle (Polymer Elektrolyt Membran Brennstoffzelle).

Aus der Druckschrift DE 103 93 467 T5 ist beispielsweise ein typischer Aufbau einer solchen PEM-Brennstoffzelle bekannt. Die PEM-Brennstoffzelle umfasst eine Membranelektrodenanordnung mit einer Festpolymermembran und zwei auf gegenüberliegenden Seiten der Festpolymermembran angeordneten Elektroden, d.h. einer Anode und einer Kathode. Die Elektroden weisen dabei eine im Vergleich zur Festpolymermembran geringere Längserstreckung auf, so dass die Ränder der Festpolymermembran über die Fläche der Elektroden hinausstehen.

Typischerweise werden eine Mehrzahl dieser PEM-Zellen in Serie miteinander verschaltet, um möglichst hohe Modulspannungen zu erreichen. Somit kann eine einzige fehlerhafte Zelle zum Ausfall des gesamten Moduls führt. Die Zuverlässigkeit und Lebensdauer von PEM-Zellen kann bei hohen Kathodenpotentialen und hohen Diffusionsleckraten des Sauerstoffs von der Kathode zur Anode stark in Mitleidenschaft gezogen werden. Insbesondere im Randbereich der Zellen, in dem niedrigere Stromdichten vorherrschend, sind höhere Kathodenpotentiale und damit ein verstärkter irreversibler Aufbau der Membran zu erwarten. Der Membranabbau kann zu einer Lochbildung innerhalb der Membran und einem Ausfalls des Moduls führen.

Eine weitere aus dem Stand der Technik bekannte Brennstoffzelle wird in der Druckschrift US 2010/2211633 A1 offenbart.

### Offenbarung der Erfindung

Es ist eine Aufgabe der vorliegenden Erfindung eine Brennstoffzelle zur Verfügung zu stellen, welche eine höhere Zuverlässigkeit und eine längere Lebensdauer aufweist.

Die Aufgabe der vorliegenden Erfindung wird gelöst durch eine Brennstoffzelle aufweisend eine zwischen zwei Gasdiffusionsschichten angeordnete Membran, sowie einem auf einer ersten Seite der Membran angeordneten ersten Stromabnehmer und einem auf einer der ersten Seite gegenüberliegenden zweiten Seite angeordneten zweiten Stromabnehmer, wobei sich zumindest auf der zweiten Seite der Membran ein zweiter Stromabnehmerrandbereich im Wesentlichen bis zu einem Randbereich der Membran erstreckt oder wobei sich auf der zweiten Seite der Membran ein zweiter Stromabnehmerrandbereich stärker in Richtung eines Randbereichs der Membran erstreckt als ein auf der ersten Seite der Membran angeordneter erster Stromabnehmerrandbereich und wobei der erste Stromabnehmer den ersten Stromabnehmerrandbereich und wenigstens einen ersten Stromabnehmerzentralbereich umfasst und wobei der zweite Stromabnehmer den zweiten Stromabnehmerrandbereich und wenigstens einen zweiten Stromabnehmerzentralbereich umfasst und wobei der erste Stromabnehmerrandbereich und der wenigstens eine erste Stromabnehmerzentralbereich und/oder wobei der zweite Stromabnehmerrandbereich und der wenigstens eine zweite Stromabnehmerzentralbereich mittels einer Nahtstelle räumlich voneinander getrennt sind, wobei die Brennstoffzelle eine elektrische Last aufweist, welche elektrisch zwischen den ersten und den zweiten Stromabnehmer geschaltet ist und wobei die elektrische Last einen ohmschen Widerstand, eine Induktivität, ein galvanisches Element, einen Anschluss für eine externe weitere Last, eine Elektronik mit einer potentio- oder galvanostatischen Regelung und/oder eine Elektronik zur Versorgung einer externen Last umfasst.

Die erfindungsgemäße Brennstoffzelle hat gegenüber dem Stand der Technik den Vorteil, dass im Randbereich der Brennstoffzelle eine verbesserte elektrische Anbindung verwirklicht wurde, wodurch sich die Stromdichte im Randbereich erhöht. Die erhöhte Stromdichte im Randbereich führt vorteilhafterweise dazu, dass sich das Kathodenpotential im Randbereich reduziert und somit eine deutlich geringere Tendenz zum Membranabbau ergibt. Die Zuverlässigkeit und Langlebigkeit der Brennstoffzelle wird somit erheblich gesteigert. Die Brennstoffzelle umfasst insbesondere eine PEM-Brennstoffzelle (Polymer Elektrolyt Membran Brennstoffzelle).

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Weiterbildung der vorliegenden Erfindung ist vorgesehen, dass sich auf der ersten Seite der Membran ein erster Stromabnehmerrandbereich ebenfalls im Wesentlichen bis zu einem Randbereich der Membran erstreckt. In vorteilhafter Weise liegen somit der erste Stromabnehmerrandbereich und der zweite Stromabnehmerrandbereich entlang einer zur Membran senkrechten Richtung im Randbereich insbesondere deckungsgleich übereinander. Dies führt dazu, dass sich die Stromdichte im Randbereich weiter vergrößert und dem Membranabbau im Randbereich weiter entgegen gewirkt wird.

Gemäß einer weiteren bevorzugten Weiterbildung der vorliegenden Erfindung ist vorgesehen, dass der erste und/oder der zweite Stromabnehmerrandbereich in einer zur Membran parallelen Haupterstreckungsebene vollständig entlang des Randes der Membran verläuft. Der erste und zweite Stromabnehmerrandbereich sind in der Haupterstreckungsebene insbesondere umlaufend ausgebildet. In vorteilhafter Weise wird somit im gesamten Randbereich der Membran die Tendenz zur Membranablösung verringert.

Gemäß der vorliegenden Erfindung ist vorgesehen, dass der erste Stromabnehmer den ersten Stromabnehmerrandbereich und wenigstens einen Stromabnehmerzentralbereich umfasst und wobei der zweite Stromabnehmer den zweiten Stromabnehmerrandbereich und wenigstens einen zweiten Stromabnehmerzentralbereich umfasst. Der erste Stromabnehmerrandbereich und der wenigstens eine erste Stromabnehmerzentralbereich und/oder der zweite Stromabnehmerrandbereich und der wenigstens eine zweite Stromabnehmerzentralbereich sind mittels einer Nahtstelle räumlich voneinander getrennt. Die Trennung der Stromabnehmerzentralbereiche von den Stromabnehmerrandbereichen hat den Vorteil, dass zwischen diesen Bereichen Gas aus der Membran bzw. aus den Gasdiffusionsschichten zirkulieren kann.

Gemäß der vorliegenden Erfindung ist vorgesehen, dass die Brennstoffzelle eine elektrische Last aufweist, welche elektrisch zwischen den ersten und den zweiten Stromabnehmer geschaltet ist. Die elektrische Last ist entweder direkt mit dem ersten und dem zweiten Stromabnehmerrandbereich verbunden oder die elektrische Last ist direkt mit dem zweiten Stromabnehmerrandbereich und mit wenigstens einem ersten Stromabnehmerzentralbereich verbunden ist. Erfindungsgemäß umfasst die elektrische Last einen ohmschen Widerstand, ein galvanisches Element, einen Anschluss für eine externe Last, eine Elektronik mit einer potentio- oder galvanostatischen Regelung und/oder eine Elektronik zur Versorgung einer externen Last. Die elektrische Last sorgt vorteilhafterweise für eine weitere Erhöhung der Stromdichte im Randbereich der Membran. Die elektrische Last umfasst im Sinne der vorliegenden Erfindung eine elektrische Last, in welcher nicht die eigentliche Nutzleistung der Brennstoffzelle verbraucht werden soll, sondern welche der eigentlichen Last der Brennstoffzelle parallel geschaltet wird und durch welche ein wohldefinierter geringer Leckstrom fließen soll, nur um die Stromdichte im Randbereich der Membran und somit die Lebensdauer der Brennstoffzelle zu erhöhen. Die eigentliche Nutleistung der Brennstoffzelle dient zur Versorgung eines primären elektrischen Lastkreises, welcher über den wenigstens einen ersten Stromabnehmerzentralbereich und den wenigstens einen zweiten Stromabnehmerzentralbereich elektrisch kontaktiert wird. Bevorzugt ist vorgesehen, dass die elektrische Last temporär zuschaltbar ist. Die elektrische Last wird insbesondere bei bestimmten Betriebszuständen zugeschaltet.

Gemäß einer weiteren bevorzugten Weiterbildung der vorliegenden Erfindung ist vorgesehen, dass auf jeder Seite der Membran eine Katalysatorschicht zwischen der Membran und der jeweiligen Gasdiffusionsschicht angeordnet ist. Ferner ist insbesondere vorgesehen, dass der erste Stromabnehmer die Anode und der zweite Stromabnehmer die Kathode umfasst. Analog könnte aber auch der zweite Stromabnehmer die Anode und der erste Stromabnehmer die Kathode umfassen.

Gemäß einer weiteren bevorzugten Weiterbildung der vorliegenden Erfindung ist vorgesehen, dass die Brennstoffzelle eine elektrisch isolierende Randumfassung aufweist, welche im Randbereich der Membran die Membran, die Gasdiffusionsschichten, die Katalysatorschichten und die Stromabnehmer umhüllen.

Ein weiterer Gegenstand der vorliegenden Erfindung ist eine Brennstoffzellenanordnung aufweisend eine erfindungsgemäße erste Brennstoffzelle, eine erfindungsgemäße zweite Brennstoffzelle und eine elektrische Last, wobei die erste Brennstoffzelle und die zweite Brennstoffzelle miteinander in Reihe geschaltet sind und wobei die elektrische Last derart in Reihe mit der ersten und der zweiten Brennstoffzelle geschaltet ist, dass die elektrische Last elektrisch zwischen einen ersten Stromabnehmerrandbereich der ersten Brennstoffzelle und einen zweiten Stromabnehmerrandbereich der zweiten Brennstoffzelle geschaltet ist und dass ein zweiter Stromabnehmerrandbereich der ersten Brennstoffzelle direkt mit einem ersten Stromabnehmerrandbereich der zweiten Brennstoffzelle verbunden ist. In vorteilhafter Weise teilen sich somit mehrere Brennstoffzellen eine elektrische Last, welche zur Erhöhung der Stromdichten in den jeweiligen Randbereichen der Brennstoffzellen dient.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figuren 1 und 2**: zeigen eine schematische Schnittbildansicht einer Brennstoffzelle gemäß dem Stand der Technik und den zugehörigen Kathodenpotentialverlauf.
- **Figuren 3 und 4**: zeigen eine schematische Schnittbildansicht einer Brennstoffzelle gemäß einer ersten Ausführungsform und den zugehörigen Kathodenpotentialverlauf.
- **Figur 5**: zeigt eine schematische Schnittbildansicht einer Brennstoffzelle gemäß einer zweiten Ausführungsform.
- **Figur 6**: zeigt eine schematische Schnittbildansicht einer Brennstoffzelle gemäß einer dritten Ausführungsform.
- **Figur 7**: zeigt eine schematische Schnittbildansicht einer Brennstoffzelle gemäß einer vierten Ausführungsform der vorliegenden Erfindung.
- **Figur 8**: zeigt eine schematische Schnittbildansicht einer Brennstoffzelle gemäß einer fünften Ausführungsform der vorliegenden Erfindung.
- **Figur 9**: zeigt eine schematische Schnittbildansicht einer Brennstoffzelle gemäß einer sechsten Ausführungsform der vorliegenden Erfindung.
- **Figur 10**: zeigt eine schematische Schnittbildansicht einer Brennstoffzellenanordnung gemäß einer siebten Ausführungsform der vorliegenden Erfindung.
- **Figuren 11a bis 11d**: zeigen schematische Draufsichten der Brennstoffzellen gemäß verschiedenen Ausführungsformen.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

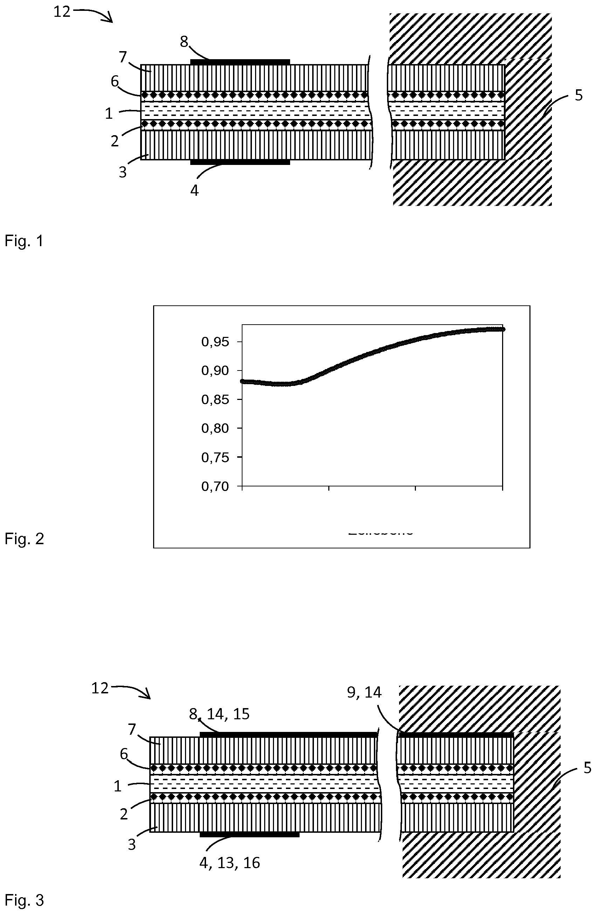

In **Figur 1** ist eine schematische Schnittbildansicht einer typischen PEM-Brennstoffzelle (Polymer Elektrolyt Membran Brennstoffzelle) 12 gemäß dem Stand der Technik dargestellt. Die Brennstoffzelle 12 weist eine protonenleitende Membran 1 auf. Die Membran 1 ist zwischen einer anodenseitigen Katalysatorschicht 2 und einer kathodenseitigen Katalysatorschicht 6 angeordnet. Die anodenseitige Katalysatorschicht 2 ist zwischen einer anodenseitige Gasdiffusionsschicht 3 und der Membran 1 angeordnet, während die kathodenseitige Katalysatorschicht 6 zwischen einer kathodenseitigen Gasdiffusionsschicht 7 und der Membran 1 angeordnet ist. Zur Kontaktierung der Brennstoffzelle 12 ist auf einer ersten Seite ein erster Stromabnehmer 13 und auf einer zweiten Seite ein zweiter Stromabnehmer 1 vorgesehen. Der erste Stromabnehmer 13 fungiert als anodenseitige elektrische Kontaktierung 4, während der zweite Stromabnehmer 14 als kathodenseitige elektrische Kontaktierung 8 dient. In einem Randbereich ist der Schichtaufbau aus Membran 1, Katalysatorschichten 2, 6 und Gasdiffusionsschichten 3, 7 von einer elektrisch isolierenden Randumfassung 5 umhüllt.

Die Brennstoffzelle 12 arbeitet, indem der Wasserstoff vom freien Gasvolumen an der Anode durch die anodenseitige Gasdiffusionsschicht 3 zur anodenseitigen Katalysatorschicht 2 geleitet und dort in Protonen und Elektronen aufgespaltet wird. Die Protonen wandern durch die Membran 1 zur kathodenseitigen Katalysatorschicht 6 und die Elektronen über einen für die Brennstoffzelle externen primären Stromkreis (nicht dargestellt) von der anodenseitigen elektrischen Kontaktierung 4 zur kathodenseitigen elektrischen Kontaktierung 8. Kathodenseitig wird der Sauerstoff durch die kathodenseitige Gasdiffusionsschicht 7 zur kathodenseitigen Katalysatorschicht 6 geführt, wo er mit den Protonen und Elektronen zu Wasser umgesetzt wird.

Unter bestimmten elektrochemischen Bedingungen sind Parallelreaktionen möglich, die die Komponenten der Brennstoffzelle 12 angreifen und zerstören können. Das Elektrodenpotential ist hierbei eine entscheidende Größe zur Abschätzung, ob ungewünschte Reaktionsregime vorherrschen könnten. Bei der PEM-Brennstoffzelle 12 ist das Kathodenpotential von zentraler Bedeutung.

In **Figur 2** ist daher schematisch der Kathodenpotentialverlauf der in Figur 1 illustrierten Brennstoffzelle 12 dargestellt. Es hat sich gezeigt, dass häufige Lastzyklen in Kombination mit hohen Kathodenpotentialen (> 0,9 V gegenüber einer Normalwasserstoffelektrode) zur verstärkten Radikalbildung und zur verstärkten Oxidation des kathodenseitigen Katalysators 6 und seiner Wanderung in die Membran 1 führen können. Beide Effekte haben eine verstärkte Degradation der Membran 1 und abrupten Ausfall der Brennstoffzelle 12 zur Folge. Die Simulation des Randbereichs der Brennstoffzelle 12 ergab, dass die lokale Stromdichte im Randbereich auf ca. 20% des Maximalwertes zurückgeht. Das Kathodenpotential erhöht sich hierbei auf über 0,9 V, wie in Figur 2 zu erkennen ist. Es droht somit eine übermäßige Degradation infolge von Platinoxidation oder verstärkter Radikalbildung, wodurch die Zuverlässigkeit und Lebensdauer der aus dem Stand der Technik bekannten Brennstoffzellen 12 beeinträchtigt wird.

In **Figur 3** ist eine schematische Schnittbildansicht einer PEM-Brennstoffzelle (Polymer Elektrolyt Membran Brennstoffzelle) 12 gemäß einer beispielhaften ersten Ausführungsform dargestellt. Die Brennstoffzelle 12 gemäß der ersten Ausführungsform basiert auf dem in Figur 1 illustrierten Aufbau, d.h. die Brennstoffzelle 12 weist eine protonenleitende Membran 1 auf, welche zwischen einer anodenseitigen Katalysatorschicht 2 und einer kathodenseitigen Katalysatorschicht 6 angeordnet. Die anodenseitige Katalysatorschicht 2 ist zwischen einer anodenseitige Gasdiffusionsschicht 3 und der Membran 1 angeordnet, während die kathodenseitige Katalysatorschicht 6 zwischen einer kathodenseitigen Gasdiffusionsschicht 7 und der Membran 1 angeordnet ist. Zur Kontaktierung der Brennstoffzelle 12 ist auf einer ersten Seite ein erster Stromabnehmer 13 und auf einer zweiten Seite ein zweiter Stromabnehmer 14 vorgesehen. Der erste Stromabnehmer 13 fungiert als anodenseitige elektrische Kontaktierung 4, während der zweite Stromabnehmer 14 als kathodenseitige elektrische Kontaktierung 8 dient. In einem Randbereich ist der Schichtaufbau aus Membran 1, Katalysatorschichten 2, 6 und Gasdiffusionsschichten 3, 7 von einer elektrisch isolierenden Randumfassung 5 umhüllt.

Im Unterschied zu der in Figur 1 gezeigten Brennstoffzelle 12 weist die Brennstoffzelle 12 gemäß der ersten Ausführungsform auf der Kathodenseite einen Stromabnehmerrandbereich 9 auf, welcher sich in einer zur Membran 1 parallelen Haupterstreckungsebene bis zum äußersten Rand der Membran 1, der kathodenseitigen Katalysatorschicht 6 und der kathodenseitigen Gasdiffusionsschicht 7 erstreckt. Der zweite Stromabnehmer 14 weist in diesem Beispiel einen zweiten Stromabnehmerzentralbereich 15, sowie den zweiten Stromabnehmerrandbereich 9 auf. Der zweite Stromabnehmerzentralbereich 15 und der zweite Stromabnehmerrandbereich 9 sind entweder einstückig miteinander verbunden, also durchgehend ausgebildet, oder zwischendurch durch eine Trennstelle unterbrochen. Durch die Realisierung des bis an den Randbereich heranreichenden zweite Stromabnehmerrandbereichs 9 wird vorteilhafterweise die Stromdichte im Randbereich erhöht. Es hat sich in überraschender und nicht zu erwartender Weise gezeigt, dass die Zuverlässigkeit und die Langlebigkeit der Brennstoffzelle 12 durch eine Zellkonstruktion erhöht werden kann, indem die Stromdichte des Randbereichs durch die vollständig bis in Randbereich erweiterte elektrische Kontaktierung 8 erhöht wird. Die kathodenseitige Kontaktierung 8, die großflächig mindestens bis zur Randumfassung heranreicht, hat zudem den Vorteil, dass der Sauerstoffpartialdruck innerhalb der kathodenseitigen Gasdiffusionsschicht 7 reduziert werden kann. Der Stromabnehmerrandbereich 9 erstreckt sich vorzugsweise entlang des Umfangs des gesamten Randbereichs der Zelle.

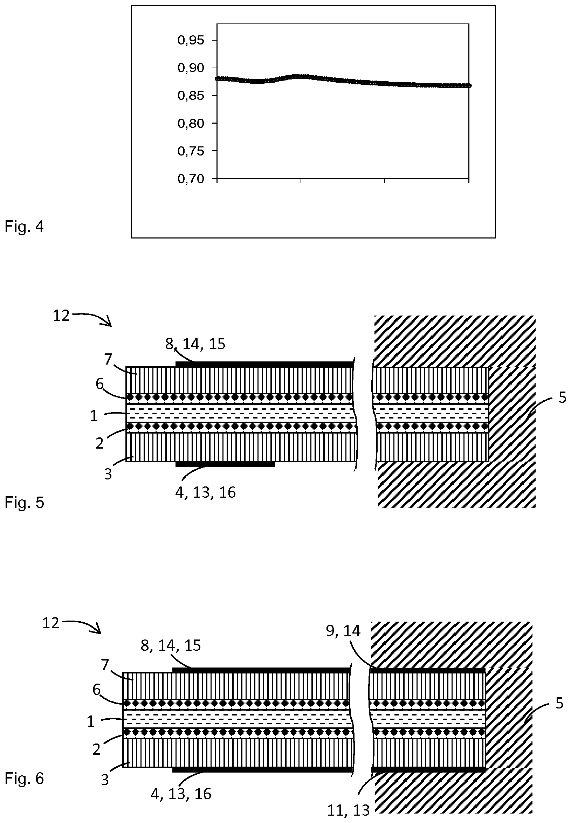

In **Figur 4** ist eine Simulation des Kathodenpotentialverlaufs der in Figur 3 illustrierten Brennstoffzelle 12 gemäß der ersten Ausführungsform schematisch gezeigt. Die Simulation des Randbereichs mit bis in den Randbereich reichenden Kontaktierung durch den Stromabnehmerrandbereich 9 zeigt, dass das Kathodenpotential durch die getroffenen Maßnahmen auf unter 0,9 V reduziert werden kann. Es ist somit von einer geringeren Tendenz zum Membranabbau und Erhöhung der Zuverlässigkeit der Brennstoffzelle 12 auszugehen.

In **Figur 5** ist eine schematische Schnittbildansicht einer Brennstoffzelle 12 gemäß einer zweiten Ausführungsform dargestellt. Die Brennstoffzelle 12 gemäß der zweiten Ausführungsform entspricht im Wesentlichen der in Figur 3 illustrierten Brennstoffzelle 12 gemäß der ersten Ausführungsform, wobei im Unterschied bei der Brennstoffzelle 12 gemäß der zweiten Ausführungsform der kathodenseitig vorgesehene Stromabnehmer 8 sich nur teilweise bis zum Randbereich erstreckt.

In **Figur 6** ist eine schematische Schnittbildansicht einer Brennstoffzelle 12 gemäß einer dritten Ausführungsform dargestellt. Die Brennstoffzelle 12 gemäß der dritten Ausführungsform entspricht im Wesentlichen der in Figur 3 illustrierten Brennstoffzelle 12 gemäß der ersten Ausführungsform, wobei im Unterschied bei der Brennstoffzelle 12 gemäß der dritten Ausführungsform auch auf der Anodenseite die elektrische Kontaktierung 4 bis zum Randbereich gezogen ist. Der erste Stromabnehmer 13 weist somit ebenfalls einen ersten Stromabnehmerzentralbereich 16 sowie einen sich bis zum Randbereich erstreckenden ersten Stromabnehmerrandbereich 11 auf. Der erste Stromabnehmerzentralbereich 16 und der erste Stromabnehmerrandbereich 11 sind entweder einstückig miteinander verbunden, also durchgehend ausgebildet, oder zwischendurch durch eine Trennstelle unterbrochen

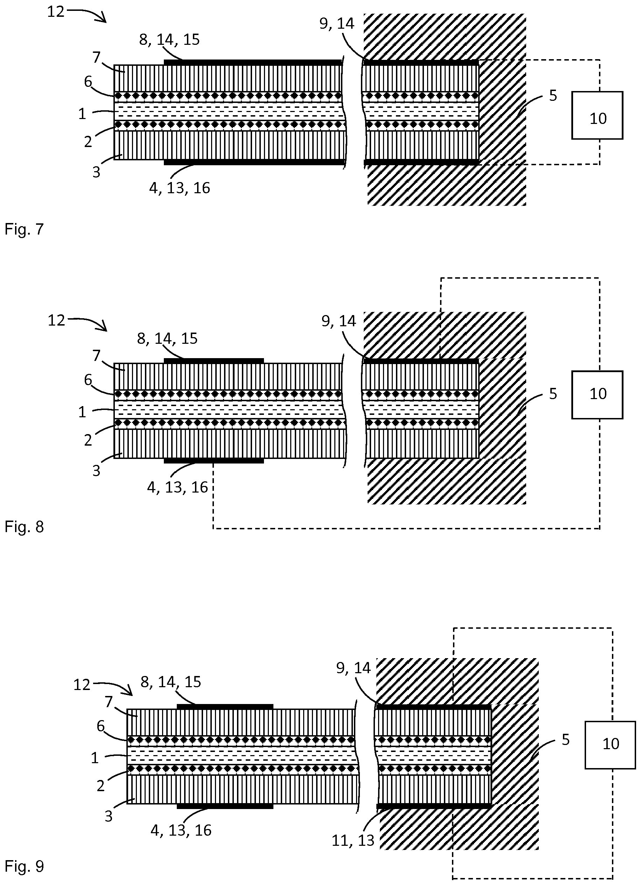

In **Figur 7** ist eine schematische Schnittbildansicht einer Brennstoffzelle 12 gemäß einer vierten Ausführungsform der vorliegenden Erfindung dargestellt. Die Brennstoffzelle 12 gemäß der vierten Ausführungsform entspricht im Wesentlichen der in Figur 6 illustrierten Brennstoffzelle 12 gemäß der dritten Ausführungsform, wobei im Unterschied die Brennstoffzelle 12 gemäß der vierten Ausführungsform zusätzlich eine elektrische Last 10 aufweist, die bevorzugt parallel zur eigentlichen, nicht dargestellten regulären Last geschaltet ist. Es wurde bereits anhand der vorstehenden Ausführungsformen gezeigt, dass das Kathodenpotential sich für den dargestellten Randbereich je nach Belastung der Brennstoffzelle 12, entsprechend der lokalen Stromdichte einstellt. Eine weitere Erhöhung der Stromdichte lässt sich erreichen, indem eine zusätzliche elektrische Belastung anoden- und kathodenseitig am Rand kontaktiert wird. Diese wird durch die elektrische Last 10 realisiert, welche elektrisch mit der Anode 4 (Erster Stromabnehmer 13) und Kathode 8 (Zweiter Stromabnehmer 14) verbunden ist. Die zusätzliche elektrische Last 10 führt zu einer weiteren Erhöhung der Stromdichte im Randbereich. Der primäre elektrische Lastkreis, der über die Kontaktierungen 4 und 8 geschlossen wird, wird ebenfalls durch elektrische Ausgleichsströme entlang der Kontaktierung des zweiten Stromabnehmerzentralbereichs 14 und des zweiten Stromabnehmerrandbereichs 9 und der Gasdiffusionsschichten 3, 7 beeinflusst. Die elektrische Last 10 kann beispielsweise als einfacher Widerstand, externer Verbraucher, Leistungselektronik zur potentio- oder galvanostatischen Regelung, Leistungselektronik zur Versorgung einer externen Last oder ein galvanisches Element ausgeführt werden.

In **Figur 8** ist eine schematische Schnittbildansicht einer Brennstoffzelle 12 gemäß einer vierten Ausführungsform der vorliegenden Erfindung dargestellt. Die Brennstoffzelle 12 gemäß der vierten Ausführungsform entspricht im Wesentlichen der in Figur 6 illustrierten Brennstoffzelle 12 gemäß der dritten Ausführungsform, wobei im Unterschied die Brennstoffzelle 12 gemäß der vierten Ausführungsform nur kathodenseitig eine sich bis zum Randbereich erstreckende Kontaktierung in Form des zweiten Stromabnehmerrandbereichs 9 aufweist und ferner auf der Kathodenseite der zweite Stromabnehmerzentralbereich 15 und der zweite Stromabnehmerrandbereich 9 nicht ineinander übergehend, sondern voneinander separiert sind. Die Stromdichte des Randbereichs wird von der Belastung der Brennstoffzelle 12 möglichst entkoppelt, indem die stromführende Kontakterweiterung (Zweiter Stromabnehmerrandbereich 9) vom primären elektrischen Lastkreis, der mit den Kontaktierungen 4 und 8 (Erster und zweiter Stromabnehmerzentralbereich 16, 15) verbunden ist, separiert wurde. Somit kann unabhängig vom Betriebsbereich bzw. Laststromabnahme das Randpotential individuell eingestellt werden. Die einfach separierte Kontaktierung nutzt gemeinsame mit dem Lastkreis die Kontaktierung der Anode 4 (Erster Stromabnehmerzentralbereich 16). Wird die Kontaktierung an der Anode 4 einseitig separiert, so wird die gegenüberliegende Kontaktierung der Kathode gemeinsam genutzt. Der Strom der gemeinsam genutzten Kontaktierung (Erster Stromabnehmerzentralbereich 16) teilt sich demnach auf die gegenüberliegende separierte Kontaktierung, d.h. auf den Stromabnehmerrandbereich 9 und der mit dem primären Lastkreis (nicht dargestellt) verbundenen Kontaktierung, d.h. auf den zweiten Stromabnehmerzentralbereich 15 auf.

In **Figur 9** ist eine schematische Schnittbildansicht einer Brennstoffzelle 12 gemäß einer fünften Ausführungsform der vorliegenden Erfindung dargestellt. Die Brennstoffzelle 12 gemäß der fünften Ausführungsform entspricht im Wesentlichen der in Figur 7 illustrierten Brennstoffzelle 12 gemäß der vierten Ausführungsform, wobei im Unterschied die Brennstoffzelle 12 gemäß der fünften Ausführungsform auch auf der Anodenseite eine separierte Kontaktierung, einerseits der mit dem primären Lastkreis verbundene Stromabnehmerzentralbereich 16 und andererseits der mit der elektrischen Last 10 verbundene Stromabnehmerrandbereich 11.

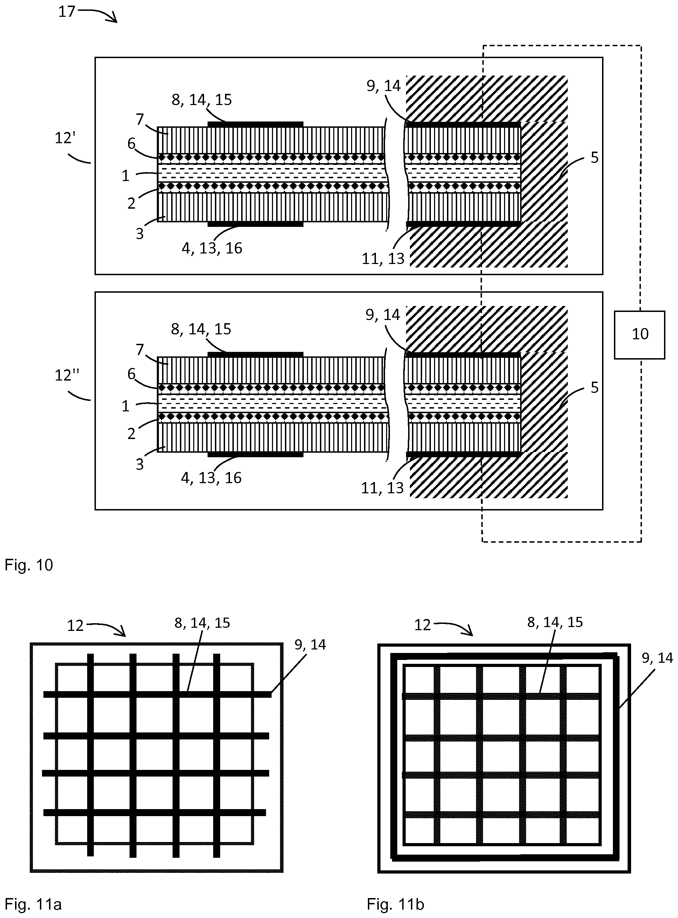

In **Figur 10** ist eine schematische Schnittbildansicht einer Brennstoffzellenanordnung 17 gemäß einer siebten Ausführungsform der vorliegenden Erfindung dargestellt. Die Brennstoffzellenanordnung 17 weist eine erste Brennstoffzelle 12' und eine zweite Brennstoffzelle 12" auf, welche in Serie geschaltet sind. Die erste und zweite Brennstoffzelle 12', 12" entsprechend dabei der in Figur 9 illustrierten Brennstoffzelle 12 gemäß der fünften Ausführungsform. Die erste und die zweite Brennstoffzelle 12', 12" sind ferner mit der elektrische Last 10 in Serie geschaltet, wobei die elektrische Last 10 mit dem ersten Stromabnehmerrandbereich 11 der ersten Brennstoffzelle 12' und mit dem zweiten Stromabnehmerrandbereich 9 der zweiten Brennstoffzelle 12" verbunden ist. Ferner sind der zweite Stromabnehmerrandbereich 9 der ersten Brennstoffzelle 12' und der erste Stromabnehmerrandbereich 11 der zweiten Brennstoffzelle 12" elektrisch miteinander verbunden.

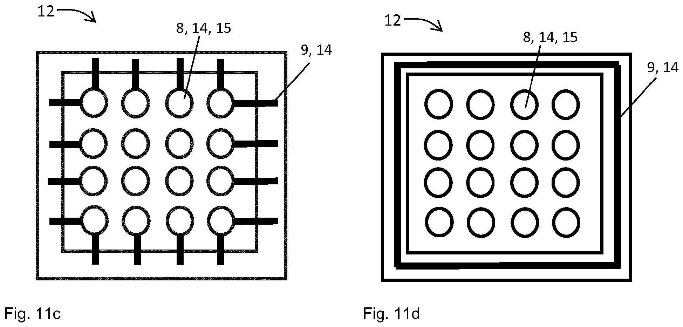

In **Figuren 11a bis 11d** sind schematische Draufsichten der Brennstoffzellen 12 gemäß verschiedenen Ausführungsformen dargestellt. In Figur 11a ist die Draufsicht der in Figur 3 illustrierten Brennstoffzelle 12 gemäß der ersten Ausführungsform gezeigt. Es ist in dieser Perspektive zu sehen, dass auf der Kathodenseite die Stromabnehmerzentralbereiche 14 und die Stromabnehmerrandbereiche 9 ohne Unterbrechung ineinander übergehen. In Figur 11b ist die Draufsicht der in Figur 8 illustrierten Brennstoffzelle 12 gemäß der vierten Ausführungsform gezeigt. In der gezeigten Perspektive ist zu sehen, dass auf der Kathodenseite die Stromabnehmerzentralbereiche 14 und die Stromabnehmerrandbereich 9 voneinander separiert sind. Ferner ist der Stromabnehmerrandbereich 9 umlaufend ausgebildet. In Figuren 11c und 11d sind die gleichen Ansichten in alternativen Ausführungsformen gezeigt, in welchen die Stromabnehmerzentralbereiche 15 nicht gitternetz- oder balkenartig, sondern in Form von einzelnen, kreisrunden Kontaktpunkten (noppenartig) ausgebildet sind. In Figur 11c sind die Stromabnehmerrandbereiche 9 jeweils mit den äußeren Stromabnehmerzentralbereichen 14 verbunden, während in Figur 11d ein umlaufender Stromabnehmerrandbereich 9 vorgesehen ist, welcher nicht mit den Stromabnehmerzentralbereichen 14 verbunden ist.

### Bezugszeichenliste

- 1: Membran
- 2: Anodenseitige Katalysatorschicht
- 3: Anodenseitige Gasdiffusionsschicht
- 4: Anodenseitige elektrische Kontaktierung
- 5: Randumfassung
- 6: Kathodenseitige Katalysatorschicht
- 7: Kathodenseitige Gasdiffusionsschicht
- 8: Kathodenseitige elektrische Kontaktierung
- 9: Zweiter Stromabnehmerrandbereich
- 10: Elektrische Last
- 11: Erster Stromabnehmerrandbereich
- 12: Brennstoffzelle
- 13: Erster Stromabnehmer
- 14: Zweiter Stromabnehmer
- 15: Zweiter Stromabnehmerzentralbereich
- 16: Erster Stromabnehmerzentralbereich
- 17: Brennstoffzellenanordnung

## Patentansprüche

1. Brennstoffzelle (12) aufweisend eine zwischen zwei Gasdiffusionsschichten (3, 7) angeordnete Membran (1), sowie einem auf einer ersten Seite der Membran (1) angeordneten ersten Stromabnehmer (13) und einem auf einer der ersten Seite gegenüberliegenden zweiten Seite angeordneten zweiten Stromabnehmer (14), wobei sich zumindest auf der zweiten Seite der Membran (1) ein zweiter Stromabnehmerrandbereich (9) im Wesentlichen bis zu einem Randbereich der Membran (1) erstreckt oder dass sich auf der zweiten Seite der Membran (1) ein zweiter Stromabnehmerrandbereich (9) stärker in Richtung eines Randbereichs der Membran (1) erstreckt als ein auf der ersten Seite der Membran (1) angeordneter erster Stromabnehmerrandbereich (11), **dadurch gekennzeichnet, dass** der erste Stromabnehmer (13) den ersten Stromabnehmerrandbereich (11) und wenigstens einen ersten Stromabnehmerzentralbereich (16) umfasst und wobei der zweite Stromabnehmer (14) den zweiten Stromabnehmerrandbereich (9) und wenigstens einen zweiten Stromabnehmerzentralbereich (15) umfasst und wobei der erste Stromabnehmerrandbereich (11) und der wenigstens eine erste Stromabnehmerzentralbereich (16) und/oder wobei der zweite Stromabnehmerrandbereich (9) und der wenigstens eine zweite Stromabnehmerzentralbereich (15) mittels einer Nahtstelle räumlich voneinander getrennt sind, wobei die Brennstoffzelle (12) eine elektrische Last (10) aufweist, welche elektrisch zwischen den ersten und den zweiten Stromabnehmer (13, 14) geschaltet ist und wobei die elektrische Last (10) einen ohmschen Widerstand, eine Induktivität, ein galvanisches Element, einen Anschluss für eine externe weitere Last, eine Elektronik mit einer potentio- oder galvanostatischen Regelung und/oder eine Elektronik zur Versorgung einer externen Last umfasst.

2. Brennstoffzelle (12) nach Anspruch 1, wobei sich auf der ersten Seite der Membran (1) ein erster Stromabnehmerrandbereich (11) ebenfalls im Wesentlichen bis zu einem Randbereich der Membran (1) erstreckt

3. Brennstoffzelle (12) nach einem der vorhergehenden Ansprüche, wobei der erste und/oder der zweite Stromabnehmerrandbereich (11, 9) in einer zur Membran (1) parallelen Haupterstreckungsebene vollständig entlang des Randes der Membran (1) verläuft

4. Brennstoffzelle (12) nach einem der vorhergehenden Ansprüche, wobei die elektrische Last (10) direkt mit dem ersten und dem zweiten Stromabnehmerrandbereich (11, 9) verbunden ist.

5. Brennstoffzelle (12) nach einem der Ansprüche 1 bis 3, wobei die elektrische Last (10) direkt mit dem zweiten Stromabnehmerrandbereich (9) und mit wenigstens einem ersten Stromabnehmerzentralbereich (16) verbunden ist.

6. Brennstoffzelle (12) nach einem der vorhergehenden Ansprüche, wobei die elektrische Last (10) temporär zuschaltbar ist.

7. Brennstoffzelle (12) nach einem der vorhergehenden Ansprüche, wobei auf jeder Seite der Membran (1) eine Katalysatorschicht (2, 6) zwischen der Membran (1) und der jeweiligen Gasdiffusionsschicht (3, 7) angeordnet ist.

8. Brennstoffzelle (12) nach einem der vorhergehenden Ansprüche, wobei die Brennstoffzelle (12) eine elektrisch isolierende Randumfassung (5) aufweist, welche im Randbereich der Membran (1) die Membran (1), die Gasdiffusionsschichten (3, 7), die Katalysatorschichten (2, 6) und die Stromabnehmer (13, 14) umhüllen.

9. Brennstoffzellenanordnung (17) aufweisend eine erste Brennstoffzelle (12) nach einem der vorhergehenden Ansprüche, eine zweite Brennstoffzelle (12) nach einem der vorhergehenden Ansprüche und eine elektrische Last (10), wobei die erste Brennstoffzelle (12) und die zweite Brennstoffzelle (12) miteinander in Reihe geschaltet sind und wobei die elektrische Last (10) derart in Reihe mit der ersten und der zweiten Brennstoffzelle (12) geschaltet ist, dass die elektrische Last (10) elektrisch zwischen einen ersten Stromabnehmerrandbereich (11) der ersten Brennstoffzelle (12) und einen zweiten Stromabnehmerrandbereich (9) der zweiten Brennstoffzelle (12) geschaltet ist und dass ein zweiter Stromabnehmerrandbereich (9) der ersten Brennstoffzelle (12) direkt mit einem ersten Stromabnehmerrandbereich (11) der zweiten Brennstoffzelle (12) verbunden ist.

## Claims

1. Fuel cell (12) comprising a membrane (1) which is arranged between two gas diffusion layers (3, 7), and also a first current collector (13) which is arranged on a first side of the membrane (1) and a second current collector (14) which is arranged on a second side, which second side is situated opposite the first side, wherein a second current collector edge region (9) extends substantially as far as an edge region of the membrane (1) at least on the second side of the membrane (1), or in that a second current collector edge region (9) extends further in the direction of an edge region of the membrane (1) on the second side of the membrane (1) than a first current collector edge region (11) which is arranged on the first side of the membrane (1), **characterized in that** the first current collector (13) comprises the first current collector edge region (11) and at least one first current collector central region (16), and wherein the second current collector (14) comprises the second current collector edge region (9) and at least one second current collector central region (15), and wherein the first current collector edge region (11) and the at least one first current collector central region (16) and/or wherein the second current collector edge region (9) and the at least one second current collector central region (15) are physically separated from one another by means of a seam, wherein the fuel cell (12) comprises an electrical load (10) which is electrically connected between the first and the second current collector (13, 14), and wherein the electrical load (10) comprises a non-reactive resistor, an inductance, a galvanic element, a connection for an external further load, an electronics system with a potentio- or galvanostatic control system and/or an electronics system for supplying an external load.

2. Fuel cell (12) according to Claim 1, wherein a first current collector edge region (11) likewise extends substantially as far as an edge region of the membrane (1) on the first side of the membrane (1).

3. Fuel cell (12) according to either of the preceding claims, wherein the first and/or the second current collector edge region (11, 9) run/runs entirely along the edge of the membrane (1) in a plane of main extent which is parallel to the membrane (1).

4. Fuel cell (12) according to one of the preceding claims, wherein the electrical load (10) is directly connected to the first and the second current collector edge region (11, 9).

5. Fuel cell (12) according to one of Claims 1 to 3, wherein the electrical load (10) is directly connected to the second current collector edge region (9) and to at least one first current collector central region (16).

6. Fuel cell (12) according to one of the preceding claims, wherein the electrical load (10) can be temporarily connected.

7. Fuel cell (12) according to one of the preceding claims, wherein a catalyst layer (2, 6) is arranged between the membrane (1) and the respective gas diffusion layer (3, 7) on each side of the membrane (1).

8. Fuel cell (12) according to one of the preceding claims, wherein the fuel cell (12) comprises an electrically insulating edge enclosure (5) which encases the membrane (1), the gas diffusion layers (3, 7), the catalyst layers (2, 6) and the current collectors (13, 14) in the edge region of the membrane (1).

9. Fuel cell arrangement (17) comprising a first fuel cell (12) according to one of the preceding claims, a second fuel cell (12) according to one of the preceding claims and an electrical load (10), wherein the first fuel cell (12) and the second fuel cell (12) are connected to one another in series, and wherein the electrical load (10) is connected to the first and the second fuel cell (12) in series in such a way that the electrical load (10) is electrically connected between a first current collector edge region (11) of the first fuel cell (12) and a second current collector edge region (9) of the second fuel cell (12), and that a second current collector edge region (9) of the first fuel cell (12) is directly connected to a first current collector edge region (11) of the second fuel cell (12).

## Revendications

1. Pile à combustible (12) comportant une membrane (1) disposée entre deux couches de diffusion gazeuse (3, 7), ainsi qu'un premier collecteur de courant (13) disposé sur une première face de la membrane (1) et qu'un second collecteur de courant (14) disposé sur une seconde face opposée à la première face, dans laquelle une seconde zone de bordure de collecteur de courant (9) s'étend au moins sur la seconde face de la membrane (1) sensiblement jusqu'à une zone de bordure de la membrane (1) ou dans laquelle une seconde zone de bordure de collecteur de courant (9) s'étend sur la seconde face de la membrane (1) davantage dans la direction de la zone de bordure de la membrane (1) qu'une première zone de bordure de collecteur de courant (11) disposée sur la première face de la membrane (1), **caractérisée en ce que** le premier collecteur de courant (13) comprend la première zone de bordure de collecteur de courant (11) et au moins une première zone centrale de collecteur de courant (16), et dans laquelle le second collecteur de courant (14) comprend la seconde zone de bordure de collecteur de courant (9) et au moins une seconde zone centrale de collecteur de courant (15), et dans laquelle la première zone de bordure de collecteur de courant (11) et l'au moins une première zone centrale de collecteur de courant (16) et/ou dans laquelle la seconde zone de bordure de collecteur de courant (9) et l'au moins une seconde zone centrale de collecteur de courant (15) sont spatialement séparées l'une de l'autre au moyen d'une couture, dans laquelle la pile à combustible (12) présente une charge électrique (10) qui est électriquement connectée entre les premier et second collecteurs de courant (13, 14), et dans laquelle la charge électrique (10) comprend une résistance ohmique, une inductance, un élément galvanique, une borne destinée à une charge externe supplémentaire, une électronique comportant une régulation potentiostatique ou galvanostatique et/ou une électronique destinée à alimenter une charge externe.

2. Pile à combustible (12) selon la revendication 1, dans laquelle une première zone de bordure de collecteur de courant (11) s'étend également sur la première face de la membrane (1) sensiblement jusqu'à une zone de bordure de la membrane (1).

3. Pile à combustible (12) selon l'une des revendications précédentes, dans laquelle la première et/ou la seconde zone de bordure de collecteur de courant (11, 9) s'étend entièrement le long de la bordure de la membrane (1) dans un plan principal parallèle à la membrane (1).

4. Pile à combustible (12) selon l'une des revendications précédentes, dans laquelle la charge électrique (10) est directement reliée aux première et seconde zones de bordure de collecteurs de courant (11, 9) .

5. Pile à combustible (12) selon l'une des revendications 1 à 3, dans laquelle la charge électrique (10) est directement reliée à la seconde zone de bordure de collecteur de courant (9) et à au moins une première zone centrale de collecteur de courant(16).

6. Pile à combustible (12) selon l'une des revendications précédentes, dans laquelle la charge électrique (10) peut être connectée temporairement.

7. Pile à combustible (12) selon l'une des revendications précédentes, dans laquelle une couche de catalyseur (2, 6) est disposée sur chaque face de la membrane (1) entre la membrane (1) et la couche de diffusion gazeuse (3, 7) respective.

8. Pile à combustible (12) selon l'une des revendications précédentes, dans laquelle la pile à combustible (12) présente une bordure (5) électriquement isolante qui enveloppe la membrane (1), les couches de diffusion gazeuse (3, 7), les couches de catalyseur (2, 6) et les collecteurs de courant (13, 14) dans la zone de bordure de la membrane (1).

9. Système de pile à combustible (17) comprenant une première pile à combustible (12) selon l'une des revendications précédentes, une seconde pile à combustible (12) selon l'une des revendications précédentes, et une charge électrique (10), dans lequel la première pile à combustible (12) et la seconde pile à combustible (12) sont connectées en série l'une à l'autre, et dans lequel la charge électrique (10) est connectée en série aux première et seconde piles à combustible (12) de manière à ce que la charge électrique (10) soit électriquement connectée entre une première zone de bordure de collecteur de courant (11) de la première pile à combustible (12) et une seconde zone de bordure de collecteur de courant (9) de la seconde pile à combustible (12) et à ce qu'une seconde zone de bordure de collecteur de courant (9) de la première pile à combustible (12) soit directement reliée à une première zone de bordure de collecteur de courant (11) de la seconde pile à combustible (12).
